# EUROPEAN PATENT APPLICATION

(11) **EP 2 538 330 A1**
(43) Date of publication of application: **26.12.2012**
(21) Application number: 11170841.8
(22) Date of filing: 21.06.2011
(51) Int. Cl.: G06F 9/50, G06F 17/30

(54) **A method of rendering a scene file in a cloud-based render farm**

(71) Applicant: Unified Computing Limited, County Cork (IE)
(72) Inventor: Kennedy, James, County Cork (IE); Healy, David, County Cork, (IE)
(74) Representative: O'Connor, Michael Donal

(57) **Abstract**

This invention relates to a method of rendering a scene file in a cloud-based render farm. There is a problem with the known methods of rendering 3D scene files in the cloud in that the rendering is often relatively expensive and time consuming. This is exacerbated by the fact that a significant part of the expense and time spent relates to the need to transfer additional large files that are required for the rendering up to the cloud. The method according to the present invention circumvents these problems by mirroring a 3D animation studio's data repository to a location in the cloud, thereby creating a cloud-based data repository, and thereafter modifying the scene files submitted for rendering by replacing any references to the files in the studio's data repository with references to the files in the studio's cloud-based data repository. The rendering time and expense are reduced by implementing the method.

## Description

This invention relates to a method of rendering a scene file in a cloud-based render farm.

Cloud-based computing clusters are commonly used in industries with a particularly high data processing requirement. One such industry is the 3D animation industry. Rendering of 3D animation scene files is notoriously computationally expensive. Depending on the complexity of the image, each frame of a 3D animation scene file can take up to hours or even days to render on a high powered processor and there may be thousands of frames in the scene file that require rendering. It is therefore common for 3D animation studios to use cloud-based computing clusters to render their 3D animation scene files. These cloud-based computing clusters are commonly referred to in the industry as cloud-based render farms.

In order to render a 3D scene file, the studio must create an appropriate render farm in the cloud and upload the scene file to the render farm. In addition to uploading the scene file, the studio must also upload several other files stored in their data repository that are referenced by and necessary for rendering the scene file. For example, the scene file may reference one or more of texture files, colour files, lighting files and the like and these additional files are necessary to perform the render successfully.

There is however a problem with the known method of rendering scene files. Many of the additional files that must be uploaded to the cloud based render farm are quite large in size and it is expensive to upload these files to the cloud each time a scene file has to be rendered. Scene files are often rendered many times before the 3D animation artist is satisfied with the scene file and the aggregate cost of uploading the additional files to the render farm can be substantial as many cloud providers charge a fee for any data transferred to/from and within their cloud. This cost represents a significant expense to the 3D animation studio. Furthermore, by having to upload the additional files to the cloud, a delay is introduced into the rendering process thereby increasing the amount of time taken to render the scene file which is undesirable and to be avoided if possible.

It is an object of the present invention to provide a method that overcomes at least some of the difficulties with the known method.

### Statements of Invention

According to the invention there is provided a method of rendering a scene file in a cloud-based render farm comprising the initial preparatory step of:
(a) mirroring a studio's data repository in the cloud thereby providing a cloud-based data repository, the cloud-based data repository containing one or more files required to render the scene file;
and thereafter the method comprising the steps of:
(b) locating any data repository file references in the scene file;
(c) renaming the data repository file references in the scene file with the address of the corresponding file in the cloud-based data repository; and
(d) rendering the amended scene file.

By having such a method, it will no longer be necessary for the 3D animation studio to upload all of the additional files referenced by the scene file to the cloud as these files will already be stored in the cloud. Only the scene file and any referenced data files which have been updated in the studio but not yet synchronized with the cloud-based repository will have to be uploaded to the cloud. The method entails overwriting the references in the scene file to files in the studio's local data repository with file references of files in the cloud-based data repository. In this way, when the rendering needs to be performed, the cloud-based data repository will be referenced and any files required for the rendering can be obtained directly from there, a location already within the cloud. This will significantly reduce the cost of rendering 3D scene files and also will reduce the scene file rendering time as there will be no delay associated with uploading the additional files to the cloud-based render farm.

In one embodiment of the invention there is provided a method comprising the step of storing the cloud-based data repository in a permanent data storage area in the cloud.

In one embodiment of the invention there is provided a method comprising the step of connecting the cloud-based data repository to a head node of the cloud based render farm. This is seen as a particularly efficient way of performing the rendering. Furthermore, existing memory may be used to store input and output files instead of leasing more memory in the cloud.

In one embodiment of the invention there is provided a method in which a client device performs the step of renaming the data repository file references in the scene file with the address of the corresponding file in the cloud-based data repository. Alternatively, a Rendering Management Server or a cloud-based device could perform the step of renaming the data repository file references in the scene file with the address of the corresponding file in the cloud-based data repository.

In one embodiment of the invention there is provided a method in which the step of renaming the data repository file references in the scene file with the address of the corresponding file in the cloud-based data repository comprises accessing a lookup table with the address of the files in the cloud-based data repository corresponding to the data repository file references in the scene file.

In one embodiment of the invention there is provided a method in which the step of rendering the amended scene file comprises a head node of the cloud-based render farm receiving one or more files referenced in the amended scene file from the cloud-based data repository.

In one embodiment of the invention there is provided a method comprising the intermediate steps of:
(e) creating a plurality of rendering profiles;
(f) storing the rendering profiles in the cloud-based data repository; and
(g) the step of rendering the amended scene file comprises rendering the amended scene file in accordance with one of the rendering profiles.

This is a particularly preferred embodiment of the present invention. A selection can be made regarding which profile to use when rendering the scene file. Depending on the artist's motivation for rendering the scene file, different profiles may be appropriate. For example, one profile may be able to render the scene file to a lower quality standard but far quicker than another profile which may be useful if the scene file is only being rendered to see how it is developing. Alternatively, a higher quality profile may be chosen if the end result of the render is going to be sent out to a client.

In one embodiment of the invention there is provided a method comprising the intermediate step of:
(h) a client device specifying a rendering profile according to which the scene file is to be rendered.

In one embodiment of the invention there is provided a method in which the step of renaming the data repository file references in the scene file with the address of the corresponding file in the cloud-based data repository comprises:
(i) renaming the data repository file references in the scene file with the address of the corresponding file in the appropriate profile in the cloud-based data repository.

### Detailed Description of the Invention

The invention will now be more clearly understood from the following description of some embodiments thereof given by way of example only with reference to the accompanying drawings, in which:-
Figure 1 is a diagrammatic representation of a system in which a method known in the art is performed; and
Figure 2 is a diagrammatic representation of a system in which a method according to the invention is performed.

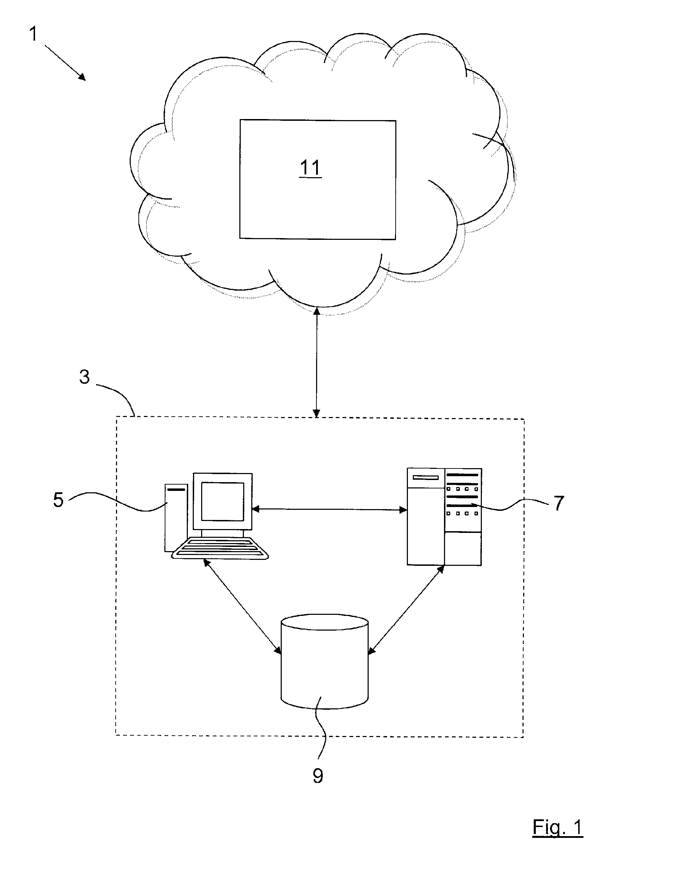

Referring to Figure 1, there is shown a system for rendering a 3D animation scene file according to a known method. The system, indicated generally by the reference numeral 1, comprises a 3D animation studio 3 having a client device 5, a rendering server 7 and an accessible data repository 9. The system further comprises a cloud based render farm 11 located in the cloud.

In use, the 3D animation studio will set up the cloud-based render farm 11 when they wish to render a scene file. The scene file will be sent from the client device 5 to the cloud based render farm 11. A scan of the scene file will be performed to determine what files in the accessible data repository are referenced by the scene file and these files are retrieved from the accessible data repository and uploaded to the cloud. This operation is time consuming and expensive and must be performed each time the scene file is to be rendered.

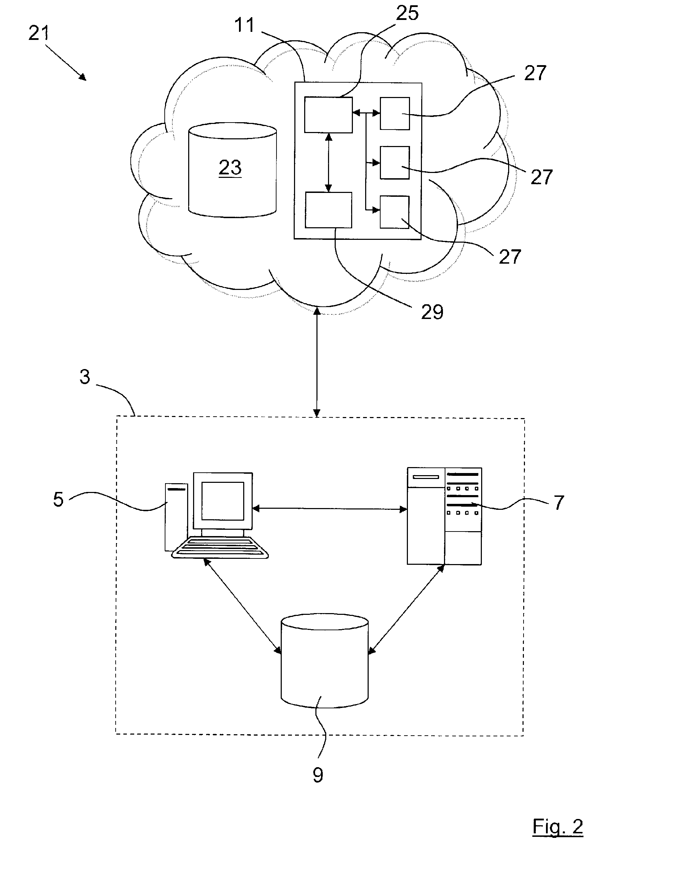

Referring to Figure 2, there is shown a system for rendering a 3D animation scene file according to the method of the present invention, where like parts have been given the same reference numerals as before. The system, indicated generally by the reference numeral 21, comprises a 3D animation studio 3 having a client device 5, a rendering server 7 and an accessible data repository 9. The system 21 further comprises a cloud-based render farm 11 located in the cloud and a cloud-based data repository 23. The cloud-based render farm 11 comprises a head node 25, a plurality of render nodes 27 and an accessible memory 29 for storage of render input files and render output files.

In use, the data repository 9 is mirrored, or in other words copied, to the cloud-based data repository. This action will usually be performed once with an update being performed either on a periodic basis such as every hour, or indeed the update may be performed each time a change is made to the data repository 9. According to the method, a client device 5 submits a scene file for rendering by the cloud-based render farm. A rendering server plugin on the client device will scan the submitted scene file for references in the scene file to additional files stored in the data repository 9. Upon detecting a reference to such an additional file, the rendering server plugin on the client device accesses a lookup table stored either on the client device or stored in data repository 9 or stored in the Render Management Server 7. The lookup table comprises a table of filesystem paths in the data repository 9 together with their corresponding filesystem path references in the cloud-based data repository 23. The client device overwrites the references in the scene file to the files in the data repository 9 with new references to files in the cloud-based data repository 23. The amended scene file is then uploaded to the render farm 11. The render farm 11, when rendering the amended scene file will access and retrieve the referenced files in the cloud-based data repository 23 thereby obviating the need to upload additional files from the 3D animation studio 3 to the render farm. The cloud-based data repository 23 is preferably stored in a permanent data storage area in the cloud and will be connected to the head node 25 of the cloud-based render farm 11. In the embodiment shown, the cloud-based render farm is provided with accessible memory 29 however it is envisaged that the cloud-based data repository 23 could be used instead if desired and convenient.

According to a particularly preferred embodiment of the present invention, the method comprises the additional steps of creating a plurality of rendering profiles for use by the 3D animation artists in their rendering of scene files. The profiles will enable the artist to render the scene file in accordance with any of the profiles and in this way the artist can perform a render that suits their needs (i.e. a quick, less detailed render for an intermediate progress check on the scene file). The profiles will enable the user to map several files in the cloud-based data repository to one in the data repository and will allow the appropriate equivalent file to be used in the rendering process based on the profile selected by the user. Furthermore, by encapsulating the additional files in a profile, the other render settings in that profile can be set in the scene file and this will help standardise the renders that are performed and help prevent non-standard renders being carried out.

In the embodiment shown, the cloud-based render farm 11 will operate a Torque ® Job Manager. However, it will be understood that the cloud based render farm could use a different Job Manager such as PBS ®, LSF ®, Qube ® or the like. The 3^{rd} Party cloud-based render farms are Amazon ® Web Services ® but alternatively could be hosted by another provider such as Microsoft Azure or the like. Various different artists' software packages can be catered for and the processing server plugin will be provided for a selection of different software packages.

In the embodiment shown, there is only a single client device 5 in the shared file network of the 3D studio 3 however it is envisaged that there may be many client devices 5 in the shared file network all of which can be connected to the rendering server 7. In addition to the above, in the embodiment shown, the rendering server 7, the data repository 9 and the client device 5 are all represented by separate, individual pieces of equipment however it is envisaged that two or even all three of these pieces of equipment may be located on a single device.

According to another aspect of the invention, it is envisaged that the method can be automated to a degree by providing a set of rules and policies that will allow the rendering server to make decisions regarding which profile to use. For example, the rules may specify that access to certain profiles will only be given to certain personnel or teams and access to other profiles will only be given when a project is at a certain development stage. In this way, the most efficient data processing according to a predetermined profile and rules can be achieved.

It will be understood that the method according to the present invention will be performed largely in software and therefore the present invention extends also to computer programs, on or in a carrier, comprising program instructions for causing a computer to carry out the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further evident that the present invention will be performed on more than one (processing) machine and even those parts of the method and system described in relation to a single processor or a single computer or machine may in fact be performed over two, three or more machines with certain parts of the computer-implemented method being performed by one device and other parts of the computer-implemented method being performed by another device. The devices may be part of a LAN, WLAN or could be connected together over a communications network including but not limited to the internet.

Many of the method steps will be performed "in the cloud", meaning that remotely located processing power will be utilised to process certain method steps of the present invention. It will be further understood that many of the method steps may not be performed in the cloud but could still be performed remotely, by which it is meant that the method steps could be performed either on a separate machine or machines in the same locality or jurisdiction or indeed on a separate machine or machines in one or more remote jurisdictions. Steps performed "in the cloud" may be performed in the same or in a different jurisdiction to the other steps. The present invention and claims are intended to cover those instances where the method is performed across two or more machines located in one or more jurisdictions.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the specification.

## Claims

1. A method of rendering a scene file in a cloud-based render farm comprising the initial preparatory step of:
(a) mirroring a studio's data repository in the cloud thereby providing a cloud-based data repository, the cloud-based data repository containing one or more files required to render the scene file;
and thereafter the method comprising the steps of:
(b) locating any data repository file references in the scene file;
(c) renaming the data repository file references in the scene file with the address of the corresponding file in the cloud-based data repository; and
(d) rendering the amended scene file.

2. A method as claimed in claim 1 comprising the step of storing the cloud-based data repository in a permanent data storage area in the cloud.

3. A method as claimed in claim 1 or 2 comprising the step of connecting the cloud-based data repository to a head node of the cloud based render farm.

4. A method as claimed in any preceding claim in which a client device performs the step of renaming the data repository file references in the scene file with the address of the corresponding file in the cloud-based data repository.

5. A method as claimed in claims 1 to 3 in which a Rendering Management Server performs the step of renaming the data repository file references in the scene file with the address of the corresponding file in the cloud-based data repository.

6. A method as claimed in claims 1 to 3 in which a cloud-based device performs the step of renaming the data repository file references in the scene file with the address of the corresponding file in the cloud-based data repository.

7. A method as claimed in any preceding claim in which the step of renaming the data repository file references in the scene file with the address of the corresponding file in the cloud-based data repository comprises accessing a lookup table with the address of the files in the cloud-based data repository corresponding to the data repository file references in the scene file.

8. A method as claimed in any preceding claim in which the step of rendering the amended scene file comprises a head node of the cloud-based render farm receiving one or more files referenced in the amended scene file from the cloud-based data repository.

9. A method as claimed in any preceding claim comprising the intermediate steps of:
(e) creating a plurality of rendering profiles;
(f) storing the rendering profiles in the cloud-based data repository; and
(g) the step of rendering the amended scene file comprises rendering the amended scene file in accordance with one of the rendering profiles.

10. A method as claimed in claim 9 comprising the intermediate step of:
(h) a client device specifying a rendering profile according to which the scene file is to be rendered.

11. A method as claimed in claims 9 or 10 in which the step of renaming the data repository file references in the scene file with the address of the corresponding file in the cloud-based data repository comprises:
(j) renaming the data repository file references in the scene file with the address of the corresponding file in the appropriate profile in the cloud-based data repository.
